(19) Europäisches Patentamt
European Patent Office
Office européen des brevets

(11) EP 0 828 149 B1

(12) EUROPÄISCHE PATENTSCHRIFT

(45) Veröffentlichungstag und Bekanntmachung des Hinweises auf die Patenterteilung:
24.10.2001 Patentblatt 2001/43

(51) Int Cl.⁷: G01M 1/22

(21) Anmeldenummer: 97111962.3

(22) Anmeldetag: 14.07.1997

(54) **Verfahren zum Stillsetzen einer von einem Elektromotor angetriebenen Hauptwelle einer Auswuchtmaschine**

Procedure for bringing the driving shaft of a balancing machine, having an electrical motor, to a standstill

Procédé pour arrêter l'axe d'entraînement d'une machine d'équilibrage à moteur électrique

(84) Benannte Vertragsstaaten:
ES FR GB IT

(30) Priorität: 06.09.1996 DE 19636267

(43) Veröffentlichungstag der Anmeldung:
11.03.1998 Patentblatt 1998/11

(73) Patentinhaber: Snap-On Deutschland Holding GmbH
40822 Mettmann (DE)

(72) Erfinder:
• Rothamel, Karl
64342 Seeheim-Jurgenheim (DE)
• Röwe, Wolfgang
64440 Bickenbach (DE)

(74) Vertreter: Nöth, Heinz, Dipl.-Phys.
Eisenführ, Speiser & Partner
Arnulfstrasse 25
80335 München (DE)

(56) Entgegenhaltungen:
EP-A- 0 383 038      EP-A- 0 550 816
EP-A- 0 554 465      US-A- 5 209 116

**Beschreibung**

Die Erfindung betrifft ein Verfahren zum Stillsetzen einer von einem Elektromotor angetriebenen Hauptwelle einer Auswuchtmaschine nach dem Meßlauf in einer bestimmten Drehwinkel-Stillstandsposition, bei dem die Drehung der Hauptwelle abgebremst und angehalten wird.

Beim Anhalten der Hauptwelle, auf welche zur Messung der Unwucht ein Rotor insbesondere ein Kraftfahrzeugrad aufgespannt ist, befindet sich die Hauptwelle bzw. der darauf aufgespannte auszuwuchtende Rotor in aller Regel nicht in der Ausgleichsposition, in welcher der Unwuchtausgleich, beispielsweise durch Einsetzen eines Ausgleichsgewichtes, durchgeführt werden kann. Beim Auswuchten beispielsweise eines Kraftfahrzeugrades ist es erwünscht, das auf die Hauptwelle aufgespannte Rad in eine solche Position (Ausgleichswinkellage) zu bringen, daß die "leichte" Stelle, an welcher das Ausgleichsgewicht angebracht werden soll, sich senkrecht über der Hauptwelle (12-Uhr-Position) befindet. Beim Auswuchten des Rotors ist es daher erforderlich, den Rotor aus der angehaltenen Position in den für den Unwuchtausgleich gewünschten Drehwinkel, welcher der Ausgleichswinkellage entspricht, einzudrehen. Dies geschieht in der Praxis von Hand.

Aufgabe der Erfindung ist es, ein Verfahren der eingangs genannten Art zu schaffen, bei welchem nach dem Meßlauf die Hauptwelle und der darauf aufgespannte Rotor insbesondere das Kraftfahrzeugrad ohne zusätzliches Drehen des Rotors in dem Drehwinkel angehalten wird, welcher der Ausgleichswinkellage entspricht.

Diese Aufgabe wird erfindungsgemäß dadurch gelöst, daß die Verzögerung der Hauptwelle beim Abbremsen gemessen wird, daß aus der gemessenen Verzögerung ein resultierender Bremsweg, der einem bestimmten Drehwinkel entspricht, ermittelt wird und daß der Bremsvorgang so gesteuert wird, daß das Ende des ermittelten Bremsweges mit der erwünschten Drehwinkel-Stillstandsposition zusammenfällt.

Zur Anpassung des aus der Verzögerung der Hauptwelle ermittelten Bremsweges an den zum Erreichen der gewünschten Drehwinkel-Stillstandsposition erforderlichen Bremsweg wird die Drehzahl variiert, beispielsweise kann der Bremsvorgang unterbrochen werden. Diese Unterbrechung erfolgt bevorzugt nach der Messung der Bremsverzögerung, die durch Bestimmung der Drehzahlen während wenigstens zwei Meßzeitpunkten während des Abbremsens nach der Unwuchtmessung erfolgen kann. Es können hierzu auch zu vorgegebenen Drehzahlen die sich ergebenden Zeitpunkte bestimmt werden. Zum Erreichen der gewünschten Drehwinkel-Stillstandsposition kann der Bremsvorgang mit der gemessenen Bremsverzögerung in einem bestimmten Winkel, vorzugsweise 30° vor der gewünschten Drehwinkel-Stillstandsposition, wieder aufgenommen werden.

Eine bevorzugte Ausführungsform der Erfindung besteht darin, daß im Verlauf des Bremsvorganges bevorzugt in einem kurzen Winkelabstand vor Erreichen der Drehwinkel-Stillstandsposition ein Zeitgeber zugeschaltet wird, der bewirkt, daß nach Ablauf einer aus der zum Zeitpunkt der Zuschaltung vorliegenden Drehzahl und Drehwinkelposition der Hauptwelle bestimmten Zeitintervalls, an dessen Ende die Hauptwelle in der die Ausgleichsposition entsprechenden Drehwinkel-Stillstandsposition sich befindet, die Hauptwelle auf einer von der weiteren Drehung der Hauptwelle unabhängigen Zeitbasis stillgesetzt wird. Der Zeitgeber kann hierzu mit der Zeit, welche aus der zum Zeitpunkt der Zuschaltung des Zeitgebers vorliegenden Drehzahl der Hauptwelle und der zuvor ermittelten Bremsverzögerung errechnet worden ist, geladen werden.

Aus der EP 0 074 416 B1 ist es bekannt, mit dem auszuwuchtenden Rotor einen Impulsgeber zu koppeln, dessen Impulse gezählt werden, wobei durch eine am Rotor vorgesehene Referenzmarkierung für eine jeweilige Drehung die Zählungen neu gestartet werden. Die jeweilige Zählung wird zur Ermittlung der Winkellage des Rotors auch beim Eindrehen in die Ausgleichsposition verwendet. Beim bekannten Verfahren und der bekannten Vorrichtung ist der Impulsgeber, welcher die Zählung veranlaßt, mit dem auszuwuchtenden Rotor gekoppelt.

Im Gegensatz dazu wird bei der Erfindung insbesondere in dem Bereich, in welchem sich die Hauptwelle und der darauf aufgespannte Rotor kurz (z.B. 3°) vor der Ausgleichsdrehwinkelposition befinden, eine vom Rotor unabhängige Zeitbasis zur Steuerung des Stillstandes der Hauptwelle der Auswuchtmaschine verwendet. Bei niedriger Drehzahl, welche die Hauptwelle kurz vor Erreichen der Ausgleichsdrehwinkelposition hat, werden die Zeitintervalle zwischen den mit der Hauptwelle gekoppelten Inkrementalgeber so groß, daß die momentane Drehzahl nur mit Zeitverzögerung zu ermitteln ist. Ein drehzahlgesteuertes Stillsetzen der Hauptwelle exakt in der gewünschten Ausgleichsdrehwinkelposition ist daher mit der bekannten Anordnung nicht möglich.

Bei der Erfindung wird ein gezieltes Stillsetzen der Hauptwelle der Auswuchtmaschine nach dem Meßlauf in der gewünschten Ausgleichsdrehwinkelposition erreicht. Dabei kann das auszuwuchtende Kraftfahrzeugrad, welches auf die Hauptwelle der Auswuchtmaschine aufgespannt ist, so angehalten werden, daß die "leichte" Stelle, an welcher das Ausgleichsgewicht am Rad angebracht werden soll, senkrecht über der Hauptwelle (12-Uhr-Position) zum Stillstand kommt.

Der Bremsvorgang kann in herkömmlicher Weise, beispielsweise mit Hilfe einer Elektromagnetbremse, wie sie auch in der EP 0 550 816 A2 gezeigt ist, durchgeführt werden. Hierbei kann im Verlauf des Bremsvorganges zu einem bestimmten Zeitpunkt (Winkelabstand), insbesondere kurz (z.B. etwa 3° bis 15°) vor Erreichen der Ausgleichswinkellage die Differenz aus der zu diesem Zeitpunkt vorliegenden Ist-Drehzahl und einer aufgrund der gemessenen Bremsverzögerung zu diesem Zeitpunkt berechneten Soll-Drehzahl ermittelt und das Bremsmoment der Elektromagnetbremse zur Anpassung des restlichen Bremsweges an den Restdrehwinkel bis zur Ausgleichswinkellage in Abhängigkeit von der ermittelten Differenz eingestellt werden. In bevorzugter Weise wird jedoch der Bremsvorgang ohne zusätzliche Bremse mit Hilfe des Elektromotors, der den Antrieb der Hauptwelle beim Unwuchtmeßvorgang liefert, durchgeführt. In bevorzugter Weise kommt hierbei ein Ein-Phasen-Wechselstrommotor, wie er beispielsweise aus der EP 0 554 465 B1 bekannt ist, oder ein Drehstrommotor zum Einsatz. Dabei wird die Bremswirkung allein dadurch erzielt, daß das Drehmoment im Antriebsmotor (Ein-Phasen-Wechselstrommotor oder Drehstrommotor) umgekehrt wird (Gegenstrombremse). Sobald die Hauptwelle und der darauf aufgespannte Rotor, insbesondere das Kraftfahrzeugrad die gewünschte Ausgleichsdrehwinkellage erreicht hat, wird durch die zugeschaltete Zeitgebersteuerung, welche auf der Grundlage einer von der Rotordrehung unabhängigen Zeitbasis arbeitet, der Motorstrom exakt an der Ausgleichsdrehwinkelposition, d.h. bei Stillstand (Drehzahl 0) der Hauptwelle abgeschaltet und damit eine Umkehr der Drehrichtung der Hauptwelle verhindert. Die Hauptwelle bleibt in dieser gewünschten Winkelposition. Bei der Bemessung des in den Zeitgeber geladenen Zeitintervalls sind die Drehwinkelposition, welche die Hauptwelle kurz vor Erreichen der Ausgleichsdrehwinkelposition einnimmt, beispielsweise die Drehwinkeldifferenz von 3° sowie die Drehzahl, welche die Hauptwelle und der darauf aufgespannte Rotor bei dieser kurz vor der Ausgleichsdrehwinkelposition liegenden Drehwinkelposition hat, berücksichtigt worden. Dieses Zeitintervall kann daher als Steuergröße für die exakte Abschaltung des Motorstroms beim Stillsetzen (Drehzahl 0) der Hauptwelle in der Ausgleichsdrehwinkelposition verwendet werden.

Anhand der Figuren wird die Erfindung noch näher erläutert. Es zeigt:

Fig. 1 einen zeitlichen Verlauf der Drehzahl einer Hauptwelle einer Auswuchtmaschine beim Hochlauf, beim Meßlauf und beim Abbremsen bis zum Stillsetzen der Hauptwelle, wobei das Stillsetzen gemäß einem Ausführungsbeispiel der Erfindung durchgeführt wird;

Fig. 2 ein Ablaufdiagramm zur Erzielung des in der Fig. 1 dargestellten Drehzahlverlaufs; und

Fig. 3 ein Blockschaltbild, welches die wesentlichen Funktionsgruppen zur Durchführung des erfindungsgemäßen Verfahrens enthält.

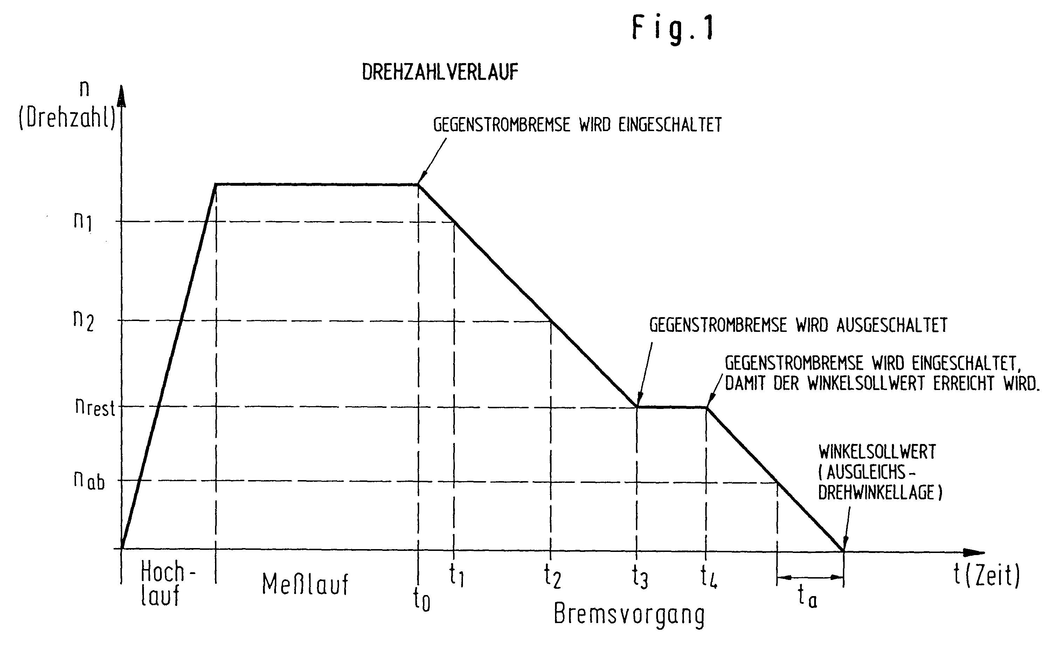

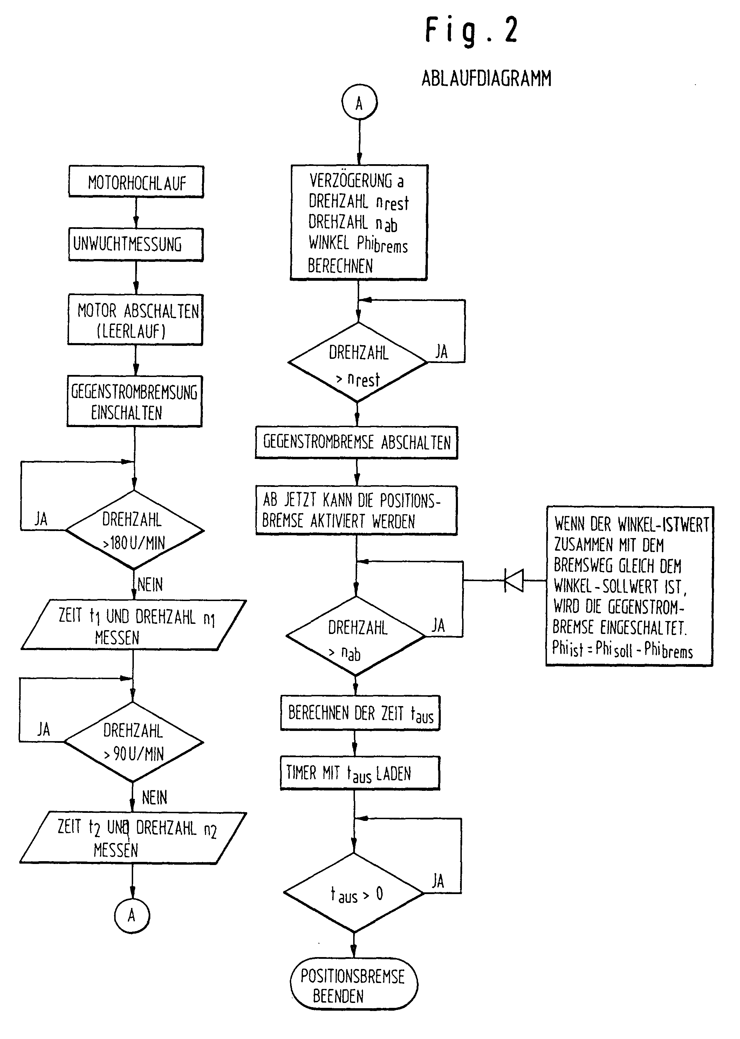

An einem auf eine Hauptwelle einer Auswuchtmaschine aufgespannten Rotor insbesondere Kraftfahrzeugrad wird die Hauptwelle durch einen elektrischen Antriebsmotor (Ein-Phasen-Wechselstrommotor oder Drehstrommotor) in einem Hochlauf auf Meßdrehzahl gebracht (Fig. 1 und 2). Bei der Meßdrehzahl wird dann die Unwuchtmessung durchgeführt. Der Motor wird dann kurz (z.B. 40 m/sec.) auf Leerlauf geschaltet und die Gegenstrombremsung eingeschaltet (Zeitpunkt $t_0$), so daß das Abbremsen der Hauptwelle beginnt. Die Gegenstrombremsung (Drehmomentumkehr) wird dadurch bewirkt, daß die Phasenfolge der am Motor angelegten Wechselspannung getauscht wird. Dies entspricht beim Ein-Phasen-Wechselstrommotor einer Phasenverschiebung von 90° und beim Drehstrommotor einer Phasenverschiebung von 120°. Während des Bremsvorganges wird beim dargestellten Ausführungsbeispiel an zwei Meßpunkten (Zeitpunkte t1 und t2) die jeweilige Drehzahl $n_1$, $n_2$ der Hauptwelle gemessen. Dies kann mit Hilfe eines an die Hauptwelle direkt oder indirekt gekoppelten Impulsgebers (Inkrementalgeber) erfolgen. Hieraus berechnet sich die Bremsverzögerung a gemäß folgender Gleichung:

$$a = \frac{2 \cdot \pi}{60} \cdot \frac{n_2 - n_1}{t_2 - t_1}$$

Im Bremsverlauf wird nun eine Restdrehzahl $n_r$ ausgewählt, bei welcher mit der ermittelten Bremsverzögerung a innerhalb einer bestimmten Winkeldifferenz φr, welche bevorzugt 30° beträgt, die Hauptwelle mit dem darauf ausgespannten Rotor zum Stillstand gebracht werden kann. In bevorzugter Weise wird zur Gewinnung der Drehwinkeldifferenz (Restdrehwinkel $φ_r$ = 30°) der Bremsvorgang (Gegenstrombremse) ausgeschaltet, so daß exakt die Bremsverzögerung a, der Restwinkel φr und die Restdrehzahl $n_r$ zueinander passend vorliegen. Die Restdrehzahl $n_r$ ergibt sich nach folgender Formel

$$n_r = \frac{60}{2 \cdot \pi} \cdot \sqrt{-2 \cdot φ_r}$$

Während des erneuten Bremsvorgangs (Gegenstrombremse wird wieder eingeschaltet) fällt die Drehzahl auf $n_{ab}$ ab. Diese Drehzahl wird kurz vor dem Drehwinkel-Sollwert (Ausgleichsdrehwinkellage) erreicht. Die entsprechende Drehwinkelposition $φ_{ab}$ kann z.B. 3° vor dem Drehwinkel-Sollwert (Ausgleichsdrehwinkellage) liegen ($φ_{ab}$ = 3°). Bei Erreichen dieser Drehzahl wird ein Zeitgeber mit einer Zeit (Zeitintervall $t_a$) geladen. Der Zeitgeber gibt das Zeitintervall $t_a$ vor, an dessen Ende die Hauptwelle und das darauf aufgespannte Kraftfahrzeugrad zum Stillstand kommt. Der Zeitgeber sorgt dafür, daß zu diesem Zeitpunkt die durch den elektrischen Antrieb bewirkte Gegenstrombremse abge-

schaltet wird. Das Zeitintervall $t_a$, welches bei der Drehzahl $n_{ab}$ dem Restwinkel $\varphi_{ab}$, welcher beispielsweise 3° beträgt, entspricht, ergibt sich nach folgender Formel

$$t_a = \frac{2 \cdot \pi}{60} \cdot \frac{n_{ab}}{a}$$

Die in dieser Formel erhaltene Drehzahl $n_{ab}$ (z. B. $\varphi_{ab}$ = 3°) vor dem Erreichen des Winkelsollwertes ist durch folgende Formel gegeben

$$n_{ab} = \frac{60}{2 \cdot \pi} \cdot \sqrt{-2 \cdot \varphi_{ab}}$$

Es ist erforderlich, das Erreichen des Winkelsollwertes (Ausgleichsdrehwinkelposition) der Hauptwelle und des darauf aufgespannten Rotors (Kraftfahrzeugrades) bei Stillstand (Drehzahl 0) der Hauptwelle sofort zu erkennen. Um eine Umkehr der Drehrichtung zu vermeiden, muß in diesem Zeitpunkt die Stromzufuhr (Gegenstrom) zum elektrischen Antriebsmotor abgeschaltet werden. Diese Abschaltung erfolgt daher, wie oben schon erläutert, unterhalb einer bestimmten Drehzahlschwelle, welche beispielsweise 3° vor dem Stillstand vorliegt, nicht drehzahlabhängig, sondern zeitabhängig. Mit dem an die Drehung der Hauptwelle bzw. des Rotors in bekannter Weise (DE 31 24 248 A1 oder EP 74 416 A1) gekoppelten Inkrementalgeber ist es nicht möglich, exakt dann den Motor (Gegenstrombremse) abzuschalten, wenn die Hauptwelle und der Rotor den Winkelsollwert (Ausgleichsdrehwinkellage) erreicht haben. Dies liegt daran, daß die Drehzahl nur aus der Zeit zwischen den Inkrementen berechnet werden kann und diese Zeitintervalle zwischen den Inkrementen bei fallender Drehzahl immer größer werden, bis schließlich bei der Drehzahl 0 kein Signalwechsel (Inkrement) mehr auftritt. Die so ermittelte Drehzahl ist immer ein Mittelwert aus dem letzten Zeitintervall und bei ihrer Gewinnung zwangsläufig bereits veraltet. Wenn zum Schalten (Einschalten bzw. Ausschalten) des Bremsvorganges, insbesondere des Elektromotors, Relais verwendet werden, kann für die Zeit, mit welcher der Zeitgeber geladen wird, auch die Schaltverzögerung $t_{RV}$ der bzw. des Relais berücksichtigt werden. In diesem Fall beträgt die in den Zeitgeber zu ladende Zeit $t_a$:

$$t_a = \frac{2 \cdot \pi}{60} \cdot \frac{n_{ab}}{a} - t_{RV}$$

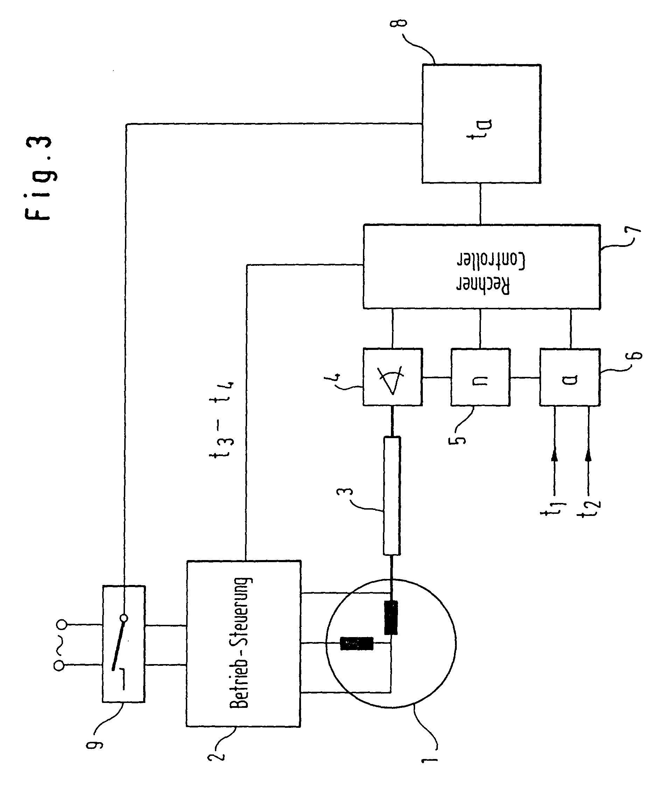

In der Fig. 3 ist ein Blockschaltbild eines Ausführungsbeispiels dargestellt, mit welchem das oben erläuterte Verfahren durchgeführt werden kann.

Von einem Antriebsmotor 1, der als Ein-Phasen-Wechselstrommotor ausgebildet ist, wird eine in der Fig. 3 schematisch dargestellte Hauptwelle 3 einer Auswuchtmaschine, auf welche ein nicht näher dargestellter auszuwuchtender Rotor, insbesondere Kraftfahrzeugrad aufgespannt ist, angetrieben. Mit der Hauptwelle ist ein Inkrementalgeber 4 verbunden, der Winkelinkremente liefert. Dieser Inkrementalgeber kann beispielsweise so ausgebildet sein, wie es in der DE 31 24 248 A1 dargestellt ist. An den Inkrementalgeber 4 ist ein Drehzahlgeber 5 angeschlossen, welcher aus der zeitlichen Folge der vom Inkrementalgeber 4 gelieferten Winkelinkremente ein drehzahlproportionales Signal bildet. An den Drehzahlgeber 5 ist ein Bremsverzögerungsgeber 6 angeschlossen, der nach Durchführung des Unwuchtmeßlaufes zu verschiedenen Zeiten $t_1$ und $t_2$ (Fig. 1) die vom Drehzahlgeber 5 gelieferten drehzahlproportionalen Signale ermittelt und unter Berücksichtigung der Zeitdifferenz $t_2 - t_1$ ein während des Bremsvorganges propotionales Bremsverzögerungssignal bildet.

Die Steuerung der verschiedenen Betriebszustände des Elektromotors 1 erfolgt mit Hilfe einer Betriebssteuerungseinrichtung 2, welche verschiedene Relais für den Vorwärts- und Rückwärtslauf des Motors sowie zum Schalten eines Drehmomentkondensators aufweist. Diese Betriebssteuereinrichtung 2 kann so ausgebildet sein, wie es aus der EP 0 524 465 A1 für einen Ein-Phasen-Wechselstrommotor bekannt ist. Es kann eine Vorrichtung zum Kleinhalten der Schaltfunken (Lichtbogenbildung) an den Motorrelais vorgesehen sein. Hierzu kann eine Verstärkerschaltung zur Erfassung der Relais-Schaltzeiten durch programmgesteuertes Auswerten des Stromverlaufs in den Relaisspulen beim Ein- und Ausschalten, eine Verstärkerschaltung zum Umsetzen der Netzspannung in ein netzfrequentes Rechtecksignal zum programmgesteuerten netzsynchronen Schalten der Relais sowie ein Widerstand zum Entladen des Drehmomentkondensators für den Ein-Phasen-Wechselstrommotor über den Ruhekontakt des zum Schalten des Drehmomentkondensators dienenden Relais, so daß dessen Ladungszustand beim Einschalten bekannt ist, vorgesehen sein. Kleine Schaltfunken werden durch Öffnen der Relaiskontakte kurz vor dem Nulldurchgang der Netzspannung erreicht.

Die vom Inkrementalgeber 4, dem Drehzahlgeber 5 und dem Bremsverzögerungsgeber 6 gebildeten Signale werden in einem Rechner 7, der als Microcontroller ausgebildet sein kann, ausgewertet. Der Rechner 7 bestimmt aus der Bremsverzögerung, welche vom Bremsverzögerungsgeber 6 geliefert wird, den resultierenden Bremsweg, welchen die Hauptwelle 3 und der darauf aufgespannte Rotor beim Bremsvorgang zurücklegen. Dieser Bremsweg entspricht einem bestimmten Drehwinkel. Da durch den Inkrementalgeber 4 der jeweilige Drehwinkel der Hauptwelle 3 ermittelt wird, führt der Rechner 7 eine Steuerung, insbesondere durch entsprechende Änderung der Drehzahl der Hauptwelle so durch, daß das Ende des ermittelten Bremsweges mit der gewünschten Drehwinkel-Stillstandsposition, welche der Ausgleichswinkellage, in welcher der Unwuchtausgleich durchgeführt wird entspricht, zusammenfällt. Beim dargestellten Ausführungsbeispiel wird dies dadurch erreicht, daß der Bremsvorgang während eines Zeitraumes zwischen den Zeitpunkten $t_3$ und $t_4$ (Fig. 1) unterbrochen wird.

Während des Abbremsens der Hauptwelle 3 und des darauf aufgespannten Rotors nach dem Meßlauf wird die Betriebssteuereinrichtung 2 vom Rechner 7 oder einer anderen zentralen nicht näher dargestellten Recheneinheit so angesteuert, daß beispielsweise der in Fig. 4 der EP 0 524 465 B1 dargestellte Schaltzustand der Relais und Kondensatoren vorliegt. Dieser Betriebszustand, welcher eine erste Bremsphase darstellt, ist während eines Zeitraumes vorhanden, der in der Fig. 1 vom Einschaltzeitpunkt $t_0$ des Bremsvorganges (Gegenstrombremse wird eingeschaltet) bis zum Zeitpunkt $t_3$ (Gegenstrombremse wird ausgeschaltet) vorhanden ist. Beim Ausschalten der Gegenstrombremse während eines Zeitraumes $t_3$ bis $t_4$ kann beispielsweise in der Betriebssteuereinrichtung 2 der in Fig. 3 der EP 0 524 465 dargestellte Betriebszustand eingestellt werden. Während dieser Zeit dreht die Hauptwelle 3 für einen kurzen Zeitraum vom Zeitpunkt $t_3$ bis zum Zeitpunkt $t_4$ mit fast konstanter Drehzahl $n_r$ weiter. Durch diese Unterbrechung des Bremsvorganges wird erreicht, daß der tatsächliche Bremsweg so eingestellt wird, daß beim Wiedereinschalten des Bremsvorganges zum Zeitpunkt $t_4$ am Ende der zweiten Bremsphase der Winkel-Sollwert (Ausgleichsdrehwinkellage) der Hauptwelle 3 und des darauf aufgespannten Rotors erreicht wird.

Bei der Durchführung des Bremsvorganges mit Hilfe des für den Antrieb der Hauptwelle 3 verwendeten Elektromotors 1 ist es erforderlich, daß bei Erreichen des Endes des Bremsvorganges, d.h. bei Stillstand (Drehzahl 0) der Hauptwelle 3, der Motor abgeschaltet wird, um ein Drehen des Motors und der Hauptwelle in der Gegenrichtung zu vermeiden. Das Abschalten des Motors läßt sich jedoch nicht exakt durchführen, wenn bei niedriger Drehzahl in der Nähe des Stillstandes nur die vom Inkrementalgeber 4 vermittelten Winkelinformationen ausgewertet werden. Bei niedrigen Drehzahlen sind nämlich die Zeitintervalle zwischen den einzelnen vom Inkrementalgeber abgegebenen Impulse so groß, daß die momentane Drehzahl nur mit Zeitverzögerung ermittelt werden kann, so daß das Ausschalten des Motors zur Verhinderung eines Weiterdrehens in Gegenrichtung nach Erreichen des Stillstands allein aus den Informationen des Inkrementalgebers nicht verhindert werden kann. Zur Überwindung dieser Schwierigkeit ist mit dem Rechner 7 ein Zeitgeber 8 verbunden, der mit einer Zeit (oben definiertes Zeitintervall $t_a$) bei Erreichen einer bestimmten Drehzahlschwelle geladen wird. Diese Drehzahlschwelle liegt bei der oben definierten Drehzahl $n_{ab}$ und kann beispielsweise dann vorliegen, wenn bis zum Erreichen der Ausgleichsposition noch ein Restwinkel $\varphi_{ab}$ von beispielsweise 3° vorhanden ist. Wie oben erläutert, wird das Zeitintervall $t_a$ bestimmt aus der bei Zuschaltung des Zeitgebers 8 vorhandenen Drehzahl $n_{ab}$, dem Restwinkel $\varphi_{ab}$, der Bremsverzögerung a und, falls eine Schaltverzögerung $t_{RV}$, für das bzw. die zuschaltenden Relais in der Betriebssteuereinrichtung 2 zu berücksichtigen sind, dieser Schaltverzögerung, wie oben erläutert. Nach Ablauf des Zeitintervalls $t_a$ wird durch den Zeitgeber 8 veranlaßt, daß ein Schalter 9 geöffnet wird, so daß die Stromzufuhr zum Elektromotor 1 unterbrochen wird. Es kann sich hierbei beispielsweise um den Netzschalter handeln, mit welchem der Antriebsmotor an das Versorgungsnetz angeschlossen ist. Dieser Ausschaltvorgang fällt mit dem Erreichen der Ausgleichsdrehwinkellage zusammen, so daß gewährleistet ist, daß die Hauptwelle 3 in dieser Drehwinkellage stillsteht. Die Zuschaltung des Zeitgebers 8 kann zu jedem Zeitpunkt innerhalb der zweiten Bremsphase ab dem Zeitpunkt $t_4$ erfolgen. Innerhalb dieser Bremsphase (zweite Bremsphase beim Ausführungsbeispiel) ist gewährleistet, daß das Ende des restlichen Bremsweges mit der gewünschten Drehwinkel-Stillstandsposition (Ausgleichswinkellage) der Hauptwelle und des darauf aufgespannten Rotors zusammenfällt.

**Patentansprüche**

1. Verfahren zum Stillsetzen einer von einem Elektromotor angetriebenen Hauptwelle einer Auswuchtmaschine nach einem Unwuchtmeßlauf in einer bestimmten Drehwinkel-Stillstandsposition, bei dem die Drehung der Hauptwelle. abgebremst und angehalten wird,
   **dadurch gekennzeichnet,**
   **daß** die Verzögerung der Hauptwelle beim Abbremsen gemessen wird, daß aus der gemessenen Verzögerung ein resultierender Bremsweg, der einem bestimmten Drehwinkel entspricht, ermittelt wird und daß der Bremsvorgang so gesteuert wird, daß das Ende des ermittelten Bremsweges mit der gewünschten Drehwinkel-Stillstandsposition zusammenfällt.

2. Verfahren nach Anspruch 1, **dadurch gekennzeichnet, daß** zur Anpassung des aus der Verzögerung der Hauptwelle ermittelten Bremsweges an den zum Erreichen der gewünschten Drehwinkel-Stillstandsposition erforderlichen Bremsweg die Drehzahl der Hauptwelle geändert wird.

3. Verfahren nach Anspruch 2, **dadurch gekennzeichnet, daß** der Bremsvorgang unterbrochen wird.

4. Verfahren nach Anspruch 3, **dadurch gekennzeichnet, daß** nach der Unterbrechung des Bremsvorganges mit der gemessenen Bremsverzögerung vor Erreichen der Drehwinkel-Stillstandsposition ein Zeitgeber zugeschaltet wird, der aus der zum Zeitpunkt der Zuschaltung vorliegenden Drehzahl und Drehwinkelposition der Hauptwelle auf einer von der Drehung der Hauptwelle unabhängigen Zeitbasis ein Zeitintervall vorgibt, an dessen Ende bei stillgesetzter Hauptwelle der durch den Elektromotor bewirkte Bremsvorgang abgeschaltet wird.

5. Verfahren nach einem der Ansprüche 1 bis 4, **dadurch gekennzeichnet, daß** während des Bremsvorganges bei einer auf einem bestimmten Wert verzögerten Drehzahl der Zeitgeber zugeschaltet wird.

6. Verfahren nach Anspruch 5, **dadurch gekennzeichnet, daß** während des Bremsvorganges die jeweiligen Drehzahlen ermittelt werden.

7. Verfahren nach einem der Ansprüche 1 bis 5, **dadurch gekennzeichnet, daß** vor der Zuschaltung des Zeitgebers eine Drehzahländerung der Hauptwelle durchgeführt wird.

8. Verfahren nach Anspruch 7, **dadurch gekennzeichnet, daß** am Ende der Drehzahländerung innerhalb eines bestimmten Drehwinkelbereiches, der größer ist als der bei Zuschaltung des Zeitgebers von der Hauptwelle bis zum Stillstand zurückzulegende Drehwinkel, die bestimmte Drehwinkel-Stillstandsposition von der Hauptwelle erreicht wird.

9. Verfahren nach einem der Ansprüche 1 bis 8, **dadurch gekennzeichnet, daß** der Zeitgeber einige Winkelgrade insbesondere 3° vor der Drehwinkel-Stillstandsposition der Hauptwelle zugeschaltet wird.

10. Verfahren nach Anspruch 8, **dadurch gekennzeichnet, daß** der bestimmte Drehwinkelbereich, nach welchem die Drehwinkel-Stillstandsposition erreicht wird, etwa 30° beträgt.

11. Verfahren nach einem der Ansprüche 1 bis 10, **dadurch gekennzeichnet, daß** zur Bestimmung der Bremsverzögerung die Drehzahlen der Hauptwelle in wenigstens zwei Zeitpunkten des Bremsvorganges gemessen werden.

12. Verfahren nach einem der Ansprüche 1 bis 11, **dadurch gekennzeichnet, daß** die Hauptwelle allein durch Umkehrung des Drehmoments im Elektromotor abgebremst wird.

13. Verfahren nach einem der Ansprüche 1 bis 12, **dadurch gekennzeichnet, daß** der Elektromotor bei Erreichen der Drehwinkel-Stillstandsposition abgeschaltet wird.

14. Verfahren nach einem der Ansprüche 1 bis 13, **dadurch gekennzeichnet, daß** zum Abbremsen der Hauptwelle ein zum Antrieb der Hauptwelle dienender Ein-Phasen-Wechselstrom- oder Drehstrommotor mit Drehmomentumkehr verwendet wird.

15. Verfahren nach Anspruch 14, **dadurch gekennzeichnet, daß** die Phasenfolge der am Elektromotor angelegten Wechselspannungen getauscht wird.

16. Verfahren nach einem der Ansprüche 1 bis 14, **dadurch gekennzeichnet, daß** bei der Berechnung der Schaltzeitpunkte für die während des Bremsvorganges durchzuführenden Schaltvorgänge, insbesondere der Schaltzeit mit welcher der Zeitgeber geladen wird, die Schaltverzögerungen der beim Schalten, insbesondere beim Abschalten des Bremsvorganges verwendeten Relais, berücksichtigt werden bzw. wird.

17. Verfahren nach einem der Ansprüche 1 bis 14, **dadurch gekennzeichnet, daß** in einer Bremsphase, in welcher das Ende des restlichen Bremsweges mit der gewünschten Drehwinkel-Stillstandsposition zusammenfällt der Zeitgeber zugeschaltet wird, der unabhängig von der Drehung der Hauptwelle, den Motorstrom ausschaltet, wenn die Hauptwelle die Drehwinkel-Stillstandsposition erreicht hat.

## Claims

1. A method of stopping a main shaft of a balancing machine, which is driven by an electric motor, after an unbalance measuring run, in a given rotary angle stoppage position, in which the rotary movement of the main shaft is braked and stopped,
   **characterised in that**
   the deceleration of the main shaft in the braking operation is measured, that there is ascertained from the measured deceleration a resulting braking travel which corresponds to a given rotary angle, and that the braking operation is so controlled that the end of the ascertained braking travel coincides with the desired rotary angle stoppage position.

2. A method according to claim 1 **characterised in that** the rotary speed of the main shaft is altered to adapt the braking travel ascertained from the deceleration of the main shaft to the braking travel required to attain the desired rotary angle stoppage position.

3. A method according to claim 2 **characterised in that** the braking operation is interrupted.

4. A method according to claim 3 **characterised in that** a timer is switched on after the interruption in the braking operation with the measured braking deceleration before the rotary angle stoppage position is reached, which timer from the rotary speed at the time of the timer being switched on and the rotary angle position of the main shaft predetermines on a time basis which is independent of the rotary movement of the main shaft a time interval, at the end of which with the main shaft stopped the braking operation implemented by the electric motor is switched off.

5. A method according to one of claims 1 to 4 **characterised in that** the timer is switched on during the braking operation at a rotary speed which is decelerated to a given value.

6. A method according to claim 5 **characterised in that** the respective rotary speeds are ascertained during the braking operation.

7. A method according to one of claims 1 to 5 **characterised in that** a change in the rotary speed of the main shaft is effected prior to the timer being switched on.

8. A method according to claim 7 **characterised in that** the given rotary angle stoppage position is reached by the main shaft at the end of the change in rotary speed within a given rotary angle range which is greater than the rotary angle which when the timer is switched on is to be covered by the main shaft until the stoppage condition is reached.

9. A method according to claim 8 **characterised in that** the timer is switched on a few degrees of angle, in particular 3°, prior to the rotary angle stoppage position of the main shaft.

10. A method according to claim 8 **characterised in that** the given rotary angle range after which the rotary angle stoppage position is reached is approximately 30°.

11. A method according to one of claims 1 to 10 **characterised in that** to determine the braking deceleration the rotary speeds of the main shaft are measured at at least two times in the braking operation.

12. A method according to one of claims 1 to 11 **characterised in that** the main shaft is braked solely by reversal of the torque in the electric motor.

13. A method according to one of claims 1 to 12 **characterised in that** the electric motor is switched off when the rotary angle stoppage position is reached.

14. A method according to one of claims 1 to 13 **characterised in that** a single-phase ac motor or three-phase motor with torque reversal, which serves to drive the main shaft, is used for braking the main shaft.

15. A method according to claim 14 **characterised in that** the phase sequence of the ac voltages applied to the electric motor is changed.

16. A method according to one of claims 1 to 14 **characterised in that**, when calculating the switching times for the switching operations which are to be implemented during the braking operation, in particular the switching time with which the timer is loaded, the switching delays of the relays used in the switching operation, in particular when switching off the braking operation, are or is taken into consideration.

17. A method according to one of claims 1 to 14 **characterised in that**, in a braking phase in which the end of the remaining braking travel coincides with the desired rotary angle stoppage position, the timer is switched on, which independently of the rotation of the main shaft switches off the motor current when the main shaft has reached the rotary angle stoppage position.

**Revendications**

1. Procédé pour, après une course de mesure de balourd, immobiliser l'arbre principal, entraîné par un moteur électrique, d'une machine d'équilibrage dans une position angulaire donnée d'immobilisation, dans lequel la rotation de l'arbre principal est freinée et arrêtée,
   **caractérisé en ce qu'**on mesure la décélération de l'arbre principal lors du freinage, **en ce qu'**on détermine à partir de la décélération mesurée une course de freinage résultante qui correspond à un angle de rotation donné, et **en ce que** le processus de freinage est commandé de façon que la fin de la course de freinage déterminée coïncide avec la position angulaire souhaitée d'immobilisation.

2. Procédé suivant la revendication 1, **caractérisé en ce qu'**on modifie la vitesse de rotation de l'arbre principal afin d'adapter la course de freinage déterminée à partir de la décélération de l'arbre principal à la course de freinage nécessaire pour atteindre la position angulaire souhaitée d'immobilisation.

3. Procédé suivant la revendication 2, **caractérisé en ce qu'**on interrompt le processus de freinage.

4. Procédé suivant la revendication 3, **caractérisé en**

**ce que**, après l'interruption du processus de freinage avec la décélération de freinage mesurée avant l'atteinte de la position angulaire d'immobilisation, on enclenche une horloge qui alloue un intervalle de temps en fonction de la vitesse de rotation et de la position angulaire de rotation de l'arbre principal existantes à l'instant de l'enclenchement, sur une base de temps indépendante de la rotation de l'arbre principal, intervalle à l'achèvement duquel le processus de freinage produit par le moteur électrique est coupé alors que l'arbre principal est arrêté.

5. Procédé suivant l'une des revendications 1 à 4, **caractérisé en ce qu'**on enclenche l'horloge pendant le processus de freinage, lorsque la vitesse de rotation a été décélérée à une valeur donnée.

6. Procédé suivant la revendication 5, **caractérisé en ce qu'**on détermine les vitesses de rotation respectives pendant le processus de freinage.

7. Procédé suivant l'une des revendications 1 à 5, **caractérisé en ce qu'**on modifie la vitesse de rotation de l'arbre principal avant d'enclencher l'horloge.

8. Procédé suivant la revendication 7, **caractérisé en ce que** la position angulaire donnée d'immobilisation est atteinte par l'arbre principal, à la fin de la modification de la vitesse de rotation, à l'intérieur d'une plage donnée d'angle de rotation qui est supérieure à l'angle de rotation à accomplir par l'arbre principal depuis l'enclenchement de l'horloge jusqu'à l'arrêt.

9. Procédé suivant l'une des revendications 1 à 8, **caractérisé en ce que** l'horloge est enclenchée quelques degrés d'angle avant l'atteinte de la position angulaire d'immobilisation de l'arbre principal, notamment 3° avant.

10. Procédé suivant la revendication 8, **caractérisé en ce que** la plage donnée d'angle de rotation à la suite de laquelle la position angulaire d'immobilisation est atteinte est égale à environ 30°.

11. Procédé suivant l'une des revendications 1 à 10, **caractérisé en ce que**, afin de déterminer la décélération de freinage, on mesure les vitesses de rotation de l'arbre principal à au moins deux instants du processus de freinage.

12. Procédé suivant l'une des revendications 1 à 11, **caractérisé en ce que** l'arbre principal est freiné simplement en inversant le couple de rotation du moteur électrique.

13. Procédé suivant l'une des revendications 1 à 12, **caractérisé en ce que** le moteur électrique est coupé à l'atteinte de la position angulaire d'immobilisation.

14. Procédé suivant l'une des revendications 1 à 13, **caractérisé en ce que**, pour freiner l'arbre principal, on utilise un moteur à courant alternatif monophasé ou un moteur à courant triphasé à inversion de couple, moteur qui sert à entraîner l'arbre principal.

15. Procédé suivant la revendication 14, **caractérisé en ce qu'**on permute l'ordre des phases des tensions alternatives appliquées au moteur électrique.

16. Procédé suivant l'une des revendications 1 à 14, **caractérisé en ce que**, pour le calcul des instants de commutation pour les processus de commutation à effectuer pendant le processus de freinage, notamment du temps de commutation avec lequel est chargée l'horloge, on tient compte des retards d'enclenchement des relais utilisés pour la commutation, notamment pour la coupure du processus de freinage.

17. Procédé suivant l'une des revendications 1 à 14, **caractérisé en ce qu'**on enclenche l'horloge dans une phase de freinage dans laquelle la fin de la course de freinage résiduelle coïncide avec la position angulaire souhaitée d'immobilisation, horloge qui coupe, indépendamment de la rotation de l'arbre principal, le courant du moteur lorsque l'arbre principal a atteint la position angulaire d'immobilisation.

# Fig.1

### DREHZAHLVERLAUF

GEGENSTROMBREMSE WIRD EINGESCHALTET

GEGENSTROMBREMSE WIRD AUSGESCHALTET

GEGENSTROMBREMSE WIRD EINGESCHALTET, DAMIT DER WINKELSOLLWERT ERREICHT WIRD.

WINKELSOLLWERT (AUSGLEICHS- DREHWINKELLAGE)

n (Drehzahl)

$n_1$

$n_2$

$n_{rest}$

$n_{ab}$

Hoch- lauf

Meßlauf

$t_0$  $t_1$  $t_2$  $t_3$  $t_4$  $t_a$

t (Zeit)

Bremsvorgang

EP 0 828 149 B1

# Fig. 2

## ABLAUFDIAGRAMM

MOTORHOCHLAUF

UNWUCHTMESSUNG

MOTOR ABSCHALTEN (LEERLAUF)

GEGENSTROMBREMSUNG EINSCHALTEN

DREHZAHL >180 U/MIN — JA / NEIN

ZEIT $t_1$ UND DREHZAHL $n_1$ MESSEN

DREHZAHL >90 U/MIN — JA / NEIN

ZEIT $t_2$ UND DREHZAHL $n_2$ MESSEN

A

A

VERZÖGERUNG a
DREHZAHL $n_{rest}$
DREHZAHL $n_{ab}$
WINKEL $Phi_{brems}$
BERECHNEN

DREHZAHL > $n_{rest}$ — JA

GEGENSTROMBREMSE ABSCHALTEN

AB JETZT KANN DIE POSITIONS-BREMSE AKTIVIERT WERDEN

DREHZAHL > $n_{ab}$ — JA

WENN DER WINKEL-ISTWERT ZUSAMMEN MIT DEM BREMSWEG GLEICH DEM WINKEL-SOLLWERT IST, WIRD DIE GEGENSTROM-BREMSE EINGESCHALTET.
$Phi_{ist} = Phi_{soll} - Phi_{brems}$

BERECHNEN DER ZEIT $t_{aus}$

TIMER MIT $t_{aus}$ LADEN

$t_{aus} > 0$ — JA

POSITIONSBREMSE BEENDEN

10

Fig.3

Betrieb-Steuerung

Rechner Controller

$t_3 - t_4$

$t_a$

$t_1$

$t_2$